# EUROPEAN PATENT APPLICATION

(11) **EP 4 663 075 A1**
(43) Date of publication of application: **17.12.2025**
(21) Application number: 25181405.9
(22) Date of filing: 06.06.2025
(51) Int. Cl.: A47J 31/057, A47J 31/06, A47J 31/44

(54) **FLOW DIVERTING ADJUSTMENT APPARATUS AND COFFEE MACHINE**

(30) Priority: 11.06.2024 CN 202421313199 U
(71) Applicant: BSH Hausgeräte GmbH, 81739 München (DE)
(72) Inventor: Zhu, Qingmei, Nanjing, 210046 (CN)

(57) **Abstract**

This application relates to a flow diverting adjustment apparatus and a coffee machine. The flow diverting adjustment apparatus includes: a flow diverting member, where the flow diverting member includes an input channel and at least two output channels, the output channels are capable of being in intercommunication, and the input channel is capable of being in communication with at least one of the output channels; and a flow blocking assembly, where the flow blocking assembly includes at least one flow blocking member, and the flow blocking member is movably connected to the flow diverting member, to cause the output channels to be in a communication state or a blocked state.

## Description

This application relates to the technical field of household appliances, and in particular, to a flow diverting adjustment apparatus and a coffee machine.

A coffee machine is a common kitchen appliance in our life. A common drip coffee machine on the market is used as an example. During use of the drip coffee machine, first, ground coffee is pressed in a coffee brewing apparatus in the drip coffee machine, and then hot water is poured into the coffee brewing apparatus through a water outlet in a machine body. The hot water is allowed to gradually flow through the ground coffee, and finally drip into a coffee pot along a pipe of the coffee brewing apparatus, so that coffee is brewed.

However, in this manner, a single stream of water is usually injected onto the ground coffee, and a concentration of brewed coffee is single and cannot be adjusted, which makes it difficult to satisfy demands of people for different tastes.

The object is therefore to provide a flow diverting adjustment apparatus and a coffee machine for the foregoing technical problems, to adjust a concentration of coffee and satisfy demands of people for different tastes.

According to an aspect, this application provides a flow diverting adjustment apparatus, configured to brew a preset substance. The flow diverting adjustment apparatus includes:
a flow diverting member, where the flow diverting member includes an input channel and at least two output channels, the output channels are capable of being in intercommunication, and the input channel is capable of being in communication with at least one of the output channels; and a flow blocking assembly, where the flow blocking assembly includes at least one flow blocking member, and the flow blocking member is movably connected to the flow diverting member, to cause the output channels to be in a communication state or a blocked state.

In the foregoing flow diverting adjustment apparatus, the flow blocking member is movably connected to the flow diverting member, to cause the output channels to be in the communication state or the blocked state. In this way, the flow diverting adjustment apparatus can control liquid to be outputted from one or more output channels onto the preset substance, to brew different quantities of preset substances, thereby obtaining preset beverages of different concentrations to satisfy different taste demands of people.

In an embodiment, the flow diverting member includes a first output channel and a second output channel, the first output channel is arranged surrounding the second output channel, the flow blocking assembly includes a first flow blocking member, and the first flow blocking member is movably connected to the flow diverting member, to cause the first output channel and the second output channel to be in a communication state or a blocked state.

In an embodiment, the flow diverting member further includes a third output channel, the second output channel is arranged surrounding the third output channel, the flow blocking assembly further includes a second flow blocking member, and the second flow blocking member is movably connected to the flow diverting member, to cause the second output channel and the third output channel to be in a communication state or a blocked state.

In an embodiment, the flow diverting adjustment apparatus further includes an adjustment member, where the adjustment member is connected to the first flow blocking member and the second flow blocking member, and the adjustment member is capable of driving the first flow blocking member and the second flow blocking member to move relative to the flow diverting member.

In an embodiment, the adjustment member includes a first limiting portion and a second limiting portion, and the first limiting portion and the second limiting portion are respectively arranged at two ends of the first flow blocking member, to cause the adjustment member to be capable of driving the first flow blocking member to rotate relative to the flow diverting member; and/or the adjustment member includes an engagement portion, an engagement groove is provided on the first flow blocking member, and the engagement portion is capable of being engaged with the engagement groove, to cause the adjustment member to be capable of driving the first flow blocking member to rotate relative to the flow diverting member.

In an embodiment, a rotating groove is provided on the second flow blocking member, the adjustment member is capable of abutting against the rotating groove, and a depth of the rotating groove gradually increases in a circumferential direction of the second flow blocking member, to cause the adjustment member to be capable of driving the second flow blocking member to move in a direction away from or close to the flow diverting member when rotating.

In an embodiment, the flow diverting adjustment apparatus further includes an elastic member connected to the second flow blocking member, one end of the elastic member abuts against the adjustment member, the other end of the elastic member abuts against the flow diverting member, and the adjustment member is capable of driving the elastic member to rotate; and/or a fixing groove is provided on the second flow blocking member, the flow diverting member includes a fixing portion, the fixing portion is arranged extending in the direction away from the flow diverting member, and the fixing groove is capable of being snapped into the fixing portion.

In an embodiment, the adjustment member has a first position, a second position, and a third position relative to the flow diverting member; when the adjustment member is at the first position, the first flow blocking member blocks communication between the first output channel and the second output channel, and the input channel is in communication with the first output channel; when the adjustment member is at the second position, the first output channel is in communication with the second output channel, the second flow blocking member blocks communication between the second output channel and the third output channel, and the input channel is in communication with the first output channel and the second output channel; and when the adjustment member is at the third position, the first output channel is in communication with the second output channel, the second output channel is in communication with the third output channel, and the input channel is in communication with the first output channel, the second output channel, and the third output channel.

According to another aspect, this application provides a coffee machine, including: the foregoing flow diverting adjustment apparatus; a liquid injection apparatus, connected to the flow diverting member and configured to inject liquid into the input channel; and a brewing apparatus, where the brewing apparatus is connected to the flow diverting member, and the output channel is configured to output the liquid to the brewing apparatus.

In an embodiment, the different output channels are located at different positions of the brewing apparatus in a radial direction of the flow diverting member.

To make the foregoing objectives, features, and advantages of this application more comprehensible, detailed descriptions are made to specific implementations of this application below with reference to the accompanying drawings. In the drawings:
FIG. 1 is a schematic diagram of a coffee machine according to an embodiment of this application;
FIG. 2 is a schematic diagram of an accommodating member according to an embodiment of this application;
FIG. 3 is a schematic diagram of a flow diverting adjustment apparatus according to an embodiment of this application, where an adjustment member is located at a first position;
FIG. 4 is a schematic diagram of a flow diverting adjustment apparatus according to an embodiment of this application, where an adjustment member is located at a second position;
FIG. 5 is a schematic diagram of a flow diverting adjustment apparatus according to an embodiment of this application, where an adjustment member is located at a third position;
FIG. 6 is a schematic diagram of a flow diverting member according to an embodiment of this application;
FIG. 7 is a schematic diagram of a first flow blocking member according to an embodiment of this application;
FIG. 8 is a schematic diagram of a second flow blocking member according to an embodiment of this application; and
FIG. 9 is a schematic diagram of an adjustment member according to an embodiment of this application.

In the following descriptions, many specific details are described for fully understanding this application. However, this application can be implemented in many other manners different from those described herein. A person skilled in the art may make similar improvements without departing from the connotation of this application. Therefore, this application is not limited to the specific embodiments disclosed below.

In the descriptions of this application, it should be understood that, if terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" appear, orientations or position relationships indicated by the terms are orientations or position relationships shown based on the accompanying drawings, and are used merely for describing this application and simplifying the descriptions, rather than indicating or implying that the apparatus or element should have a particular orientation or be constructed and operated in a particular orientation, and therefore, should not be construed as a limitation on this application.

In addition, if terms such as "first" and "second" appear, the terms are used merely for the purpose of description, and shall not be construed as indicating or implying relative importance or implying a quantity of indicated technical features. Therefore, features defining "first" and "second" can explicitly or implicitly include at least one of the features. In the descriptions of this application, if a term "plurality of" appears, unless otherwise specified, "plurality of" means at least two, for example, two or three.

In this application, it should be noted that unless otherwise clearly specified and limited, if terms "mounted", "connected", "connection", and "fixed" appears, the terms should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art can understand specific meanings of the foregoing terms in this application according to a specific situation.

In this application, unless explicitly specified or limited otherwise, if descriptions similar to that a first feature is "on" or "under" a second feature, the descriptions may mean that the first feature is in direct contact with the second feature, or the first feature is in indirect contact with the second feature through an intermediate medium. Moreover, that the first feature is "over", "above", or "up" the second feature may be that the first feature is directly above or obliquely above the second feature, or simply indicates that a horizontal height of the first feature is higher than that of the second feature. That the first feature is "under", "below", or "down" the second feature may be that the first feature is directly below or obliquely below the second feature, or simply indicates that a horizontal height of the first feature is less than that of the second feature.

It should be noted that, when a component is referred to as "being fixed to" or "being arranged on" another component, the component may be directly on the another component, or an intervening component may exist. When a component is considered to be "connected to" another component, the component may be directly connected to the another component, or an intervening component may also exist. If terms "vertical", "horizontal", "upper", "down", "left", "right" and similar expressions used in this application exist, the terms are merely for the purpose of illustration and do not indicate a unique implementation.

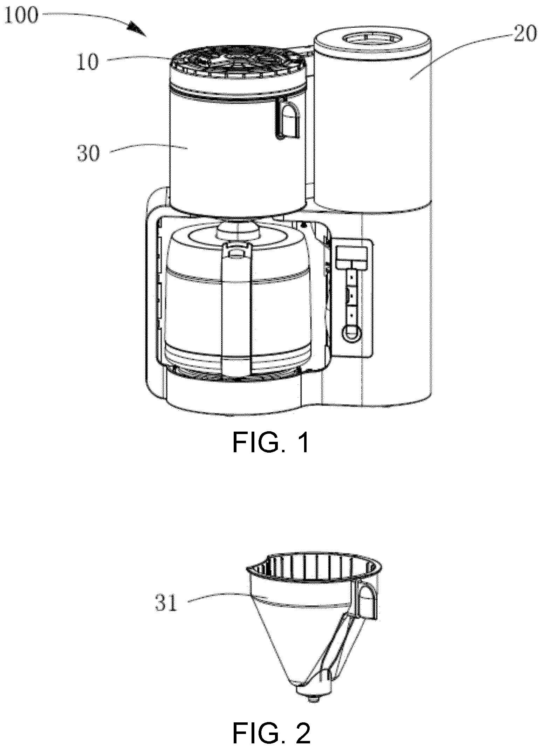

Referring to FIG. 1, FIG. 1 is a schematic diagram of a coffee machine according to an embodiment of this application. In some embodiments, a coffee machine 100 includes a flow diverting adjustment apparatus 10, a liquid injection apparatus 20, and a brewing apparatus 30. The liquid injection apparatus 20 is configured to inject liquid (for example, hot water) into the flow diverting adjustment apparatus 10, and the flow diverting adjustment apparatus 10 is configured to perform flow diverting adjustment on a flow rate of the liquid and inject the liquid into the brewing apparatus 30. After passing through the flow diverting adjustment apparatus 10, the liquid enters the brewing apparatus 30 from different outflow positions. The brewing apparatus 30 can accommodate a preset substance (for example, ground coffee), so that the preset substance is brewed through the liquid, to obtain a preset beverage (for example, coffee).

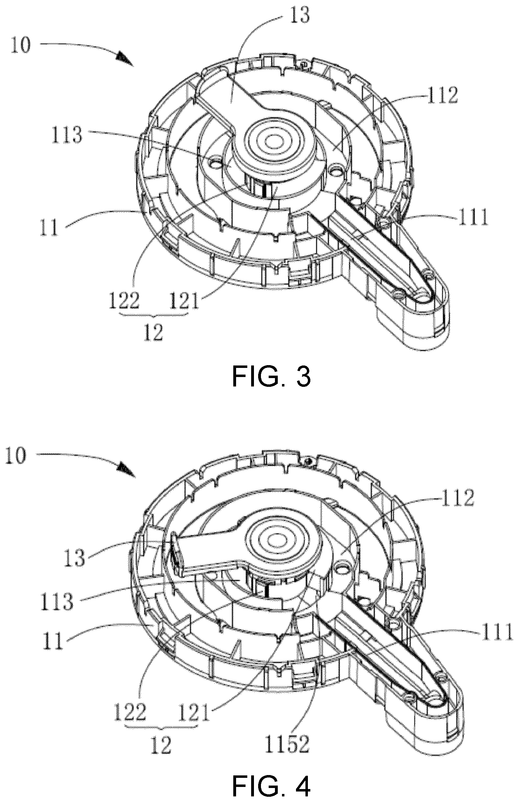

Specifically, in this embodiment, with reference to FIG. 3 to FIG. 6, the flow diverting adjustment apparatus 10 includes a flow diverting member 11 configured to divert the liquid. The flow diverting member 11 includes an input channel 111 and an output channel. The liquid injection apparatus 20 is connected to the flow diverting member 11 and can inject the liquid into the input channel 111. The flow diverting member 11 has a shape matching an upper opening of the brewing apparatus 30, and the flow diverting member 11 covers the top of the brewing apparatus 30. A liquid injection hole is provided on the output channel facing the brewing apparatus 30, so that the liquid steadily flows into the output channel through the input channel 111 and steadily flows into the brewing apparatus 30 through the liquid injection hole, the liquid is in full contact with the preset substance in the brewing apparatus 30, and a brewing process is completed.

Feasibly, referring to FIG. 1 and FIG. 2, the brewing apparatus 30 includes an accommodating member 31. The accommodating member 31 is an inverted conical structure, to be specific, a size of an upper-end opening of the accommodating member 31 is greater than a size of a lower-end opening of the accommodating member 31. The flow diverting member 11 is arranged covering an upper-end surface of the accommodating member 31 of the conical structure. The accommodating member 31 is arranged in an inverted cone shape, so that a thickness of the preset substance at a middle position is greater than a thickness of the preset substance at an edge position. In other words, the preset substance stored at the middle position is thick, and the preset substance stored at the edge position is thin, so that when an output position of the liquid is controlled to gradually expand from the edge position of the accommodating member 31 to the middle position, a quantity of preset substances soaked by the liquid changes more, and then a concentration difference of the prepared beverage obtained through brewing is greater, making concentration adjustment of the flow diverting adjustment apparatus 10 more effective.

Further, at least two output channels are configured. The output channels can be in intercommunication, and the input channel 111 can be in communication with at least one of the output channels. Because a cross section of the brewing apparatus 30 is circular, correspondingly, a cross section of the flow diverting member 11 is also arranged to be circular, and the plurality of output channels are arranged in an annular shape in a nested manner.

Different output channels are correspondingly located at different positions of the accommodating member 31 in a radial direction of the flow diverting member 11. Specifically, an output channel is located at a position close to an edge of the accommodating member 31, and another output channel is located at a position close to a center of a circle of the accommodating member 31. That is, compared with the another output channel, the output channel is further way from a middle position of the accommodating member 31. To match this, liquid injection holes provided at intervals are provided on each output channel. The liquid injection holes on each output channel correspondingly face different positions of the accommodating member 31, so that the liquid flows into different positions of the accommodating member 31 through liquid injection holes on different output channels, to cause the liquid to be in contact with and soak different quantities of preset substances, thereby obtaining preset beverages of different concentrations through adjustment, to satisfy different drinking demands.

After the liquid flows out to the brewing apparatus 30 through an output channel located at an edge position, the liquid is in contact with and soaks less preset substances, so that a concentration of an obtained preset beverage is lower. After the liquid flows out to the brewing apparatus 30 through two output channels located at the edge position and at the middle position, the liquid is in contact with and soaks more preset substances, so that a concentration of an obtained preset beverage is higher.

It should be noted that, a shape of flow diverting member 11 may be set based on a shape of the brewing apparatus 30. In addition, the plurality of output channels may be sequentially arranged in an extending direction of the flow diverting member 11. For example, the brewing apparatus 30 is arranged in a columnar shape, the flow diverting member 11 is arranged in a square shape, and a plurality of output channels that can be in intercommunication are sequentially arranged in a length direction of the flow diverting member 11, so that the liquid soaks different quantities of preset substances through the output channels controlling outflow of the liquid.

In some embodiments, referring to FIG. 3 to FIG. 6, the flow diverting adjustment apparatus 10 further includes a flow blocking assembly 12. The flow diverting member 11 includes at least one output channel. Correspondingly, the flow blocking assembly 12 includes at least one flow blocking member. The flow blocking member is movably connected to the flow diverting member 11, to cause the output channels to be in a communication state or a blocked state.

The flow blocking member is movably connected to the flow diverting member 11, to cause the output channels to be in a communication state or a blocked state. In this way, the flow diverting adjustment apparatus 10 can control liquid to be outputted from one or more output channels onto the preset substance, to brew different quantities of preset substances, thereby obtaining preset beverages of different concentrations to satisfy different taste demands of people.

Specifically, in this embodiment, the flow diverting member 11 includes a bottom wall 1160 and a plurality of blocking walls. The plurality of blocking walls are formed through extension of the bottom wall 1160 in a height direction. The plurality of blocking walls each are in an annular shape with an opening. The bottom wall 1160 and the blocking walls jointly enclose and form the output channels.

Feasibly, two blocking walls are configured. In this case, the flow diverting member 11 includes a first blocking wall 1161 and a second blocking wall 1162. The first blocking wall 1161 is arranged surrounding the second blocking wall 1162, so that the first blocking wall 1161, the second blocking wall 1162, and the bottom wall 1160 jointly enclose and form a first output channel 112, and an inner part of the second blocking wall 1162 and the bottom wall 1160 enclose and form a second output channel 113. The first output channel 112 is arranged surrounding the second output channel 113. A first communication port 1151 is provided on the first blocking wall 1161 facing the input channel 111, so that the input channel 111 is in communication with the first output channel 112. A second communication port 1152 is provided on the second blocking wall 1162, so that the second output channel 113 is in communication with the first output channel 112. The flow blocking assembly 12 includes a first flow blocking member 121, and the first flow blocking member 121 is movably connected to the flow diverting member 11, so that the first output channel 112 and the second output channel 113 are in a communication state or a blocked state.

Specifically, the first output channel 112 is further away from the middle position of the brewing apparatus 30 than the second output channel 113. A preset quantity of first liquid injection holes 1121 are provided on the first output channel 112, and the first liquid injection holes 1121 are provided facing positions on the brewing apparatus 30 close to the edge. A preset quantity of second liquid injection holes 1131 are provided on the second output channel 113, and the second liquid injection holes 1131 are provided facing positions on the brewing apparatus 30 close to the middle. The second communication port 1152 is provided between the first output channel 112 and the second output channel 113. When the first flow blocking member 121 blocks the second communication port 1152, the first output channel 112 and the second output channel 113 are in a blocked state. In this case, liquid in the liquid injection apparatus 20 flows into the first output channel 112 through the input channel 111, and flows out to the brewing apparatus 30 through the first liquid injection holes 1121 on the first output channel 112. The liquid is in contact with and soaks less preset substances, so that a concentration of an obtained preset beverage is lower.

The first flow blocking member 121 is moved, to cause at least a part of the second communication port 1152 to be in an open state. In this case, the first output channel 112 and the second output channel 113 are in an intercommunication state. Liquid in the liquid injection apparatus 20 flows into the first output channel 112 and the second output channel 113 through the input channel 111, and flows out to the brewing apparatus 30 through the first liquid injection holes 1121 on the first output channel 112 and the second liquid injection holes 1131 on the second output channel 113. The liquid is in contact with and soaks more preset substances, so that a concentration of an obtained preset beverage is higher.

In an optional implementation, the first flow blocking member 121 is arranged on the flow diverting member 11 in a rotation manner. When the first flow blocking member 121 is rotated to a preset position, the first flow blocking member 121 can block the second communication port 1152, then the first flow blocking member 121 is rotated at a specific angle, and at least a part of the second communication port 1152 is in an open state.

In another optional manner, the first flow blocking member 121 is located at a position of the second communication port 1152 on the flow diverting member 11, and the first flow blocking member 121 can be moved in a direction away from the bottom wall 1160 of the flow diverting member 11. When the first flow blocking member 121 is located at a preset position, a bottom surface of the first flow blocking member 121 is attached to the bottom wall 1160 of the flow diverting member 11 and blocks the second communication port 1152. The first flow blocking member 121 is moved a specific distance in the direction away from the bottom wall 1160 of the flow diverting member 11, a gap appears between the bottom surface of the first flow blocking member 121 and the bottom wall 1160 of the flow diverting member 11, and at least a part of the second communication port 1152 is in an open state.

In some embodiments, three blocking walls are configured. In this case, the flow diverting member 11 includes a first blocking wall 1161, a second blocking wall 1162, and a third blocking wall 1163. The first blocking wall 1161 is arranged surrounding the second blocking wall 1162, and the second blocking wall 1162 is arranged surrounding the third blocking wall 1163, so that the first blocking wall 1161, the second blocking wall 1162, and the bottom wall 1160 jointly enclose and form a first output channel 112, the second blocking wall 1162, the third blocking wall 1163, and the bottom wall 1160 jointly enclose and form a second output channel 113, and an inner part of the third blocking wall 1163 and the bottom wall 1160 jointly enclose and form a third output channel 114. The first output channel 112 is arranged surrounding the second output channel 113, and the second output channel 113 is arranged surrounding the third output channel 114. A first communication port 1151 is provided on the first blocking wall 1161 facing the input channel 111, so that the input channel 111 is in communication with the first output channel 112. A second communication port 1152 is provided on the second blocking wall 1162, so that the second output channel 113 is in communication with the first output channel 112. A third communication port 1153 is provided on the third blocking wall 1163, so that the third output channel 114 is in communication with the second output channel 113. The flow blocking assembly 12 further includes a second flow blocking member 122, and the second flow blocking member 122 is movably connected to the flow diverting member 11, so that the second output channel 113 and the third output channel 114 are in a communication state or a blocked state.

Specifically, the second output channel 113 is further away from the middle position of the brewing apparatus 30 than the third output channel 114, and the first output channel 112 is further away from the middle position of the brewing apparatus 30 than the second output channel 113. Correspondingly, a preset quantity of first liquid injection holes 1121 are provided on the first output channel 112, a preset quantity of second liquid injection holes 1131 are provided on the second output channel 113, and a preset quantity of third liquid injection holes 1141 are provided on the third output channel 114. The third liquid injection holes 1141 are provided facing positions on the brewing apparatus 30 close to a center, the second liquid injection holes 1131 are provided facing positions on the brewing apparatus 30 away from the center, and the first liquid injection holes 1121 are provided facing positions on the brewing apparatus 30 further away from the center. The third communication port 1153 is provided between the second output channel 113 and the third output channel 114.

When the second flow blocking member 122 blocks the third communication port 1153, the second output channel 113 and the third output channel 114 are in a blocked state. In this case, liquid in the liquid injection apparatus 20 flows into the first output channel 112 or flows into the first output channel 112 and the second output channel 113 through the input channel 111. When the liquid can flow out to the brewing apparatus 30 only through the first liquid injection holes 1121 on the first output channel 112, the liquid is in contact with and soaks less preset substances, so that a concentration of an obtained preset beverage is lower. When the liquid flows out to the brewing apparatus 30 through the first liquid injection holes 1121 on the first output channel 112 and the second liquid injection holes 1131 on the second output channel 113, the liquid is in contact with and soaks an appropriate amount of preset substances, so that a concentration of an obtained preset beverage is moderate.

The second flow blocking member 122 is moved, to cause at least a part of the third communication port 1153 to be in an open state, so that the second output channel 113 and the third output channel 114 are in a communication state. In this case, the liquid in the liquid injection apparatus 20 flows into the first output channel 112, the second output channel 113, and the third output channel 114 through the input channel 111, and flows out to the brewing apparatus 30 through the first liquid injection holes 1121 on the first output channel 112, the second liquid injection holes 1131 on the second output channel 113, and the third liquid injection holes 1141 on the third output channel 114. The liquid is in contact with and soaks more preset substances, so that a concentration of an obtained preset beverage is higher.

In an optional implementation, the second flow blocking member 122 is arranged on the flow diverting member 11 in a rotation manner. When the second flow blocking member 122 is rotated to a preset position, the second flow blocking member 122 can block the third communication port 1153, then the second flow blocking member 122 is rotated at a specific angle, and at least a part of the third communication port 1153 is in an open state.

In an optional manner, the second flow blocking member 122 is located at a position of the third communication port 1153 on the flow diverting member 11, and the second flow blocking member 122 can be moved in a direction away from the bottom wall 1160 of the flow diverting member 11. When the second flow blocking member 122 is located at a preset position, a bottom surface of the second flow blocking member 122 is attached to the bottom wall 1160 of the flow diverting member 11 and blocks the third communication port 1153. The second flow blocking member 122 is moved a specific distance in the direction away from the bottom wall 1160 of the flow diverting member 11, a gap appears between the bottom surface of the second flow blocking member 122 and the bottom wall 1160 of the flow diverting member 11, and at least a part of the third communication port 1153 is in an open state. In some embodiments, referring to FIG. 3 to FIG. 6, the flow diverting adjustment apparatus 10 further includes an adjustment member 13, and the adjustment member 13 is connected to the flow blocking assembly 12, to implement movement of the flow blocking assembly 12 relative to the flow diverting member 11, facilitating control of a communication situation between the output channels.

In this embodiment, the flow blocking assembly 12 includes the first flow blocking member 121 and the second flow blocking member 122, the adjustment member 13 is connected to the first flow blocking member 121 and the second flow blocking member 122, and the adjustment member 13 can drive the first flow blocking member 121 and the second flow blocking member 122 to move relative to the flow diverting member 11, to change a communication relationship between the output channels, to implement regulation of the concentration of the preset beverage.

In another embodiment, a quantity of adjustment members 13 may be set based on a quantity of flow blocking members. For example, two adjustment members 13 are configured, one is connected to the first flow blocking member 121, and the other is connected to the second flow blocking member 122, to implement control of the first flow blocking member 121 and the second flow blocking member 122 by the adjustment member 13.

Feasibly, the adjustment member 13 is set in a handle shape, so that the first flow blocking member 121 and the second flow blocking member 122 can be moved through direct movement of the handle-shaped adjustment member 13, thereby improving convenience and comfort during operation of flow diverting adjustment apparatus 10. Further, through a position of the handle-shaped adjustment member 13, it is easy to know a current adjustment state, and it is more convenient to accurately control a concentration of an obtained preset beverage, to satisfy a personalized demand of a user for taste and concentration.

It may be understood that a shape and a control manner of the adjustment member 13 may be set based on an actual requirement. For example, a control member is arranged to be electrically connected to the adjustment member 13, and movement of the adjustment member 13 is controlled through the control member.

In this embodiment, referring to FIG. 3 to FIG. 6, the handle-shaped adjustment member 13 can be rotated relative to the flow diverting member 11, and the adjustment member 13 has a first position, a second position, and a third position relative to the flow diverting member 11. When the adjustment member 13 is at the first position, the first flow blocking member 121 is located at the second communication port 1152 and blocks communication between the first output channel 112 and the second output channel 113. The input channel 111 is in communication with the first output channel 112, so that liquid flowing out through the first output channel 112 is in contact with and soaks less preset substances, so that a concentration of an obtained preset beverage is lower.

When the adjustment member 13 is rotated from the first position to the second position, the adjustment member 13 drives the first flow blocking member 121 to move relative to the flow diverting member 11. When the adjustment member 13 is at the second position, at least a part of the second communication port 1152 is open. The first output channel 112 is in communication with the second output channel 113, the second flow blocking member 122 blocks the third communication port 1153 to block communication between the second output channel 113 and the third output channel 114. The input channel 111 is in communication with the first output channel 112 and the second output channel 113, so that liquid flowing out through the first output channel 112 and the second output channel 113 is in contact with and soaks an appropriate amount of preset substances, so that a concentration of an obtained preset beverage is moderate.

When the adjustment member 13 is rotated from the second position to the third position, the adjustment member 13 drives the first flow blocking member 121 and the second flow blocking member 122 to move relative to the flow diverting member 11. When the adjustment member 13 is at the third position, at least a part of the second communication port 1152 and at least a part of the third communication port 1153 are open. The first output channel 112 is in communication with the second output channel 113, the second output channel 113 is in communication with the third output channel 114, and the input channel 111 is in communication with the first output channel 112, the second output channel 113, and the third output channel 114, so that liquid flowing out through the first output channel 112, the second output channel 113, and the third output channel 114 is in contact with and soaks more preset substances, so that a concentration of an obtained preset beverage is higher.

In another optional embodiment, the adjustment member 13 may be moved in a direction away from or close to the bottom wall 1160 of the flow diverting member 11, and the adjustment member 13 sequentially has a first position, a second position, and a third position in a direction away from the flow diverting member 11.

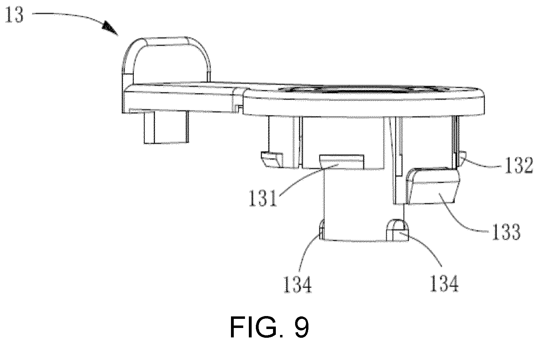

In some embodiments, referring to FIG. 3, FIG. 4, FIG. 5, and FIG. 9, the adjustment member 13 can drive the first flow blocking member 121 to rotate relative to the flow diverting member 11. Feasibly, the adjustment member 13 includes a first limiting portion 131 and a second limiting portion 132. The first limiting portion 131 and the second limiting portion 132 are respectively arranged at two ends of the first flow blocking member 121, so that when the adjustment member 13 is rotated relative to the flow diverting member 11, the first flow blocking member 121 located between the first limiting portion 131 and the second limiting portion 132 is rotated with the adjustment member 13 relative to the flow diverting member 11, to change a communication status between the first output channel 112 and the second output channel 113.

In another feasible embodiment, the adjustment member 13 can drive the first flow blocking member 121 to move in the direction away from or close to the bottom wall 1160 of the flow diverting member 11, to change the communication status between the first output channel 112 and the second output channel 113.

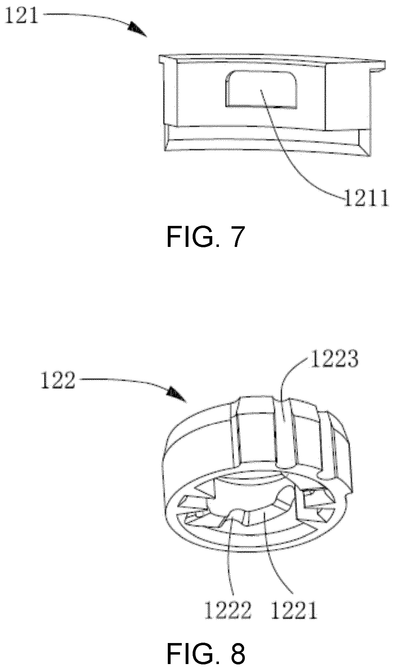

In some other embodiments, with reference to FIG. 3, FIG. 7, and FIG. 9, the adjustment member 13 includes an engagement portion 133, an engagement groove 1211 is provided on the first flow blocking member 121, and the engagement portion 133 can be engaged with the engagement groove 1211, so that when the adjustment member 13 is rotated relative to the flow diverting member 11, the engagement portion 133 drives the first flow blocking member 121 to rotate, to change the communication status between the first output channel 112 and the second output channel 113.

In a feasible embodiment, referring to FIG. 3, FIG. 7, and FIG. 9 again, the adjustment member 13 includes the first limiting portion 131, the second limiting portion 132, and the engagement portion 133. The engagement portion 133 is configured between the first limiting portion 131 and the second limiting portion 132. The first limiting portion 131 and the second limiting portion 132 are respectively arranged at two ends of the first flow blocking member 121. The engagement groove 1211 is provided on the first flow blocking member 121, and the engagement portion 133 can be engaged with the engagement groove 1211. In this way, the two ends and a middle part of the first flow blocking member 121 are rotated with the adjustment member 13 relative to the flow diverting member 11, so that rotation steadiness of the first flow blocking member 121 is improved, thereby implementing steady adjustment of the concentration of the preset beverage.

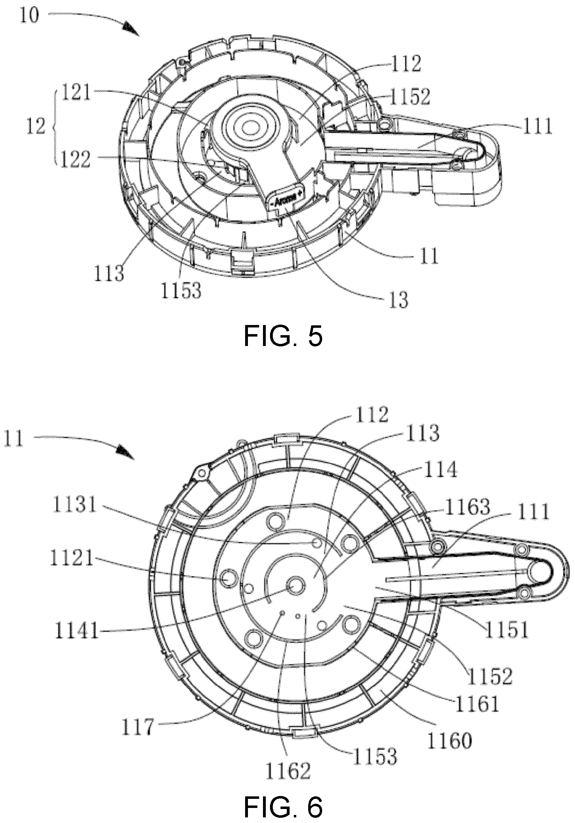

In some embodiments, referring to FIG. 5, FIG. 8, and FIG. 9, the adjustment member 13 can drive the second flow blocking member 122 to move in the direction away from or close to the bottom wall 1160 of the flow diverting member 11. Feasibly, a rotating groove 1221 is provided on an inner peripheral wall of the second flow blocking member 122, the adjustment member 13 includes a snap-fit portion 134, and the snap-fit portion 134 can always abut against a bottom wall of the rotating groove 1221 during rotation. A depth of the rotating groove 1221 gradually increases in a circumferential direction of the second flow blocking member 122, so that the adjustment member 13 can drive the second flow blocking member 122 to move in the direction away from or close to the bottom wall 1160 of the flow diverting member 11 when rotating. In another embodiment, the adjustment member 13 may drive the second flow blocking member 122 to rotate, to change a communication status between the second output channel 113 and the third output channel 114.

Specifically, in this embodiment, a direction in which the depth of the rotating groove 1221 gradually increases is opposite to a rotating direction of the adjustment member 13. When the adjustment member 13 is located at the second position, the snap-fit portion 134 is snapped into the rotating groove 1221 at a deepest position. A bottom surface of the second flow blocking member 122 is attached to the bottom wall 1160 of the flow diverting member 11, causing that the second output channel 113 and the third output channel 114 are in a state of being blocked by the second flow blocking member 122.

As the adjustment member 13 is rotated from the second position to the third position, the depth of the rotating groove 1221 decreases. Because a size of the snap-fit portion 134 is unchanged, the snap-fit portion 134 drives the second flow blocking member 122 to move in the direction away from the bottom wall 1160 of the flow diverting member 11, that is, drives the second flow blocking member 122 to move upward relative to the bottom wall 1160 of the flow diverting member 11, so that a gap is generated between the bottom surface of the second flow blocking member 122 and the bottom wall 1160 of the flow diverting member 11, the third communication port 1153 can be partially open, and the second output channel 113 and the third output channel 114 are in a communication state.

Further, a plurality of snap-fit grooves 1222 matching a shape of the snap-fit portion 134 are further provided on the bottom wall of the rotating groove 1221 in this application, to facilitate that the snap-fit portion 134 can be snapped into the snap-fit groove 1222 when the adjustment member 13 is rotated to a different position, so that the adjustment member 13 and the second flow blocking member 122 maintain stable at the different position, and the snap-fit groove 1222 can feed back a position of the adjustment member 13 when the adjustment member 13 is rotated, helping improve adjustment accuracy of the adjustment member 13. It should be noted that, the depth of the rotating groove 1221 mentioned in this application does not include a depth of the groove on the bottom wall of the rotating groove 1221.

Feasibly, the adjustment member 13 in this application includes two snap-fit portions 134 arranged opposite to each other. Correspondingly, two rotating grooves 1221 are provided on the inner peripheral wall of the second flow blocking member 122, and depths of the two rotating grooves 1221 gradually increase in a direction opposite to the rotation direction of the adjustment member 13. This arrangement helps improve steadiness of the adjustment member 13 when rotating and movement steadiness of the second flow blocking member 122.

Furthermore, the flow diverting adjustment apparatus 10 further includes an elastic member that is not shown in the figure and is connected to the second flow blocking member 122, one end of the elastic member abuts against an upper wall of the adjustment member 13, the other end of the elastic member abuts against the bottom wall 1160 of the flow diverting member 11, and the adjustment member 13 can drive the elastic member to rotate. The elastic member connected to the second flow blocking member 122 brings a certain elastic potential energy to the second flow blocking member 122, so that the second flow blocking member 122 needs to overcome the elastic potential energy to move relative to the flow diverting member 11, to ensure a flow blocking effect of the second flow blocking member 122, prevent the second flow blocking member 122 from accidentally moving when adjustment is not needed, and improve adjustment steadiness and accuracy of the flow diverting adjustment apparatus 10.

Specifically, when the adjustment member 13 is located at the first position and the second position and is rotated from the first position to the second position, the elastic member brings a specific elastic potential energy to the second flow blocking member 122. In this case, the adjustment member 13 does not drive the second flow blocking member 122 to move relative to the bottom wall 1160 of the flow diverting member 11 when rotating, and the bottom surface of the second flow blocking member 122 can be attached to the bottom wall 1160 of the flow diverting member 11 at both the first position and the second position.

It may be understood that, as the adjustment member 13 is rotated, the elastic member is also rotated with the adjustment member 13, so that the elastic potential energy brought by the elastic member to the second flow blocking member 122 decreases, and when the adjustment member 13 is rotated from the second position to the third position, the elastic potential energy brought by the elastic member to the second flow blocking member 122 further decreases. In this case, the adjustment member 13 can drive the second flow blocking member 122 to move relative to the bottom wall 1160 of the flow diverting member 11 when rotating.

Optionally, a fixing groove 1223 is further provided on the second flow blocking member 122, the flow diverting member 11 includes a fixing portion 117, the fixing portion 117 is located on the third communication port 1153 and is arranged extending in a direction away from the flow diverting member 11, and the fixing groove 1223 can be snapped into the fixing portion 117, so that when the adjustment member 13 is rotated relative to the flow diverting member 11, a combination of the fixing portion 117 and the fixing groove 1223 defines a movement direction of the second flow blocking member 122, so that the second flow blocking member 122 can be steadily moved in the direction away from or close to the bottom wall 1160 of the flow diverting member 11, and the movement steadiness of the second flow blocking member 122 is improved, thereby improving accuracy control of the concentration of the preset beverage.

The coffee machine 100 in this application can allow a user to adjust a coffee concentration based on a taste preference of the user in a process of brewing coffee. Specifically, the adjustment member 13 is operated to rotate, to move the first flow blocking member 121 and the second flow blocking member 122, so that hot water is outputted to the brewing apparatus 30 through different output channels, implementing concentration adjustment of the coffee.

When the user needs low-concentration coffee, the adjustment member 13 may be moved to the first position. In this case, the first flow blocking member 121 blocks communication between the first output channel 112 and the second output channel 113, the input channel 111 is in communication with the first output channel 112, and hot water injected from the liquid injection apparatus 20 flows into the brewing apparatus 30 through the input channel 111 and the first output channel 112, so that the hot water fully soaks less ground coffee, and a concentration of coffee flowing out of the coffee machine 100 is lower.

When the user needs moderate-concentration coffee, the adjustment member 13 may be moved to the second position. In this case, the first flow blocking member 121 is moved relative to the flow diverting member 11, the first output channel 112 is in communication with the second output channel 113, the second flow blocking member 122 blocks communication between the second output channel 113 and the third output channel 114, the input channel 111 is in communication with the first output channel 112 and the second output channel 113, and hot water injected from the liquid injection apparatus 20 flows into the brewing apparatus 30 through the input channel 111, the first output channel 112, and the second output channel 113, so that the hot water fully soaks an appropriate amount of ground coffee, and a concentration of coffee flowing out of the coffee machine 100 is moderate.

When the user needs high-concentration coffee, the adjustment member 13 may be moved to the third position. In this case, the second flow blocking member 122 is moved upward, the input channel 111 is in communication with the first output channel 112, the second output channel 113, and the third output channel 114, and hot water injected from the liquid injection apparatus 20 flows into the brewing apparatus 30 through the input channel 111, the first output channel 112, the second output channel 113, and the third output channel 114, so that the hot water fully soaks more ground coffee, and a concentration of coffee flowing out of the coffee machine 100 is higher.

In this embodiment, the user can obtain three preset beverages with strong, medium, and light tastes based on demands, and different taste demands can be satisfied. It should be noted that, a quantity of output channels and a quantity of flow blocking members may be set corresponding to a concentration demand of the user for the preset beverage. In this application, the quantity of output channels is not limited to two or three, and the quantity of flow blocking members is not limited to two or three. The quantity of output channels may alternatively be four, five, or the like. Correspondingly, the quantity of flow blocking members may be three, four, or the like. In this way, preset beverages with more concentration types are obtained through adjustment, to satisfy more taste demands of people.

The technical features in the foregoing embodiments may be randomly combined. For concise description, not all possible combinations of the technical features in the embodiment are described. However, provided that combinations of the technical features do not conflict with each other, the combinations of the technical features are considered as falling within the scope recorded in this specification.

The foregoing embodiments merely express several implementations of this application. The descriptions thereof are relatively specific and detailed, but should not be understood as limitations to the scope of this application. A person of ordinary skill in the art may make various changes and improvements without departing from the ideas of this application, which shall all fall within the protection scope of this application. Therefore, the protection scope of this application is subject to the protection scope of the appended claims.

### List of Reference Numerals:

- 100:: Coffee machine;
- 10:: Flow diverting adjustment apparatus;
- 11:: Flow diverting member;
- 111:: Input channel;
- 112:: First output channel;
- 1121:: First liquid injection hole;
- 113:: Second output channel;
- 1131:: Second liquid injection hole;
- 114:: Third output channel;
- 1141:: Third liquid injection hole;
- 1151:: First communication port;
- 1152:: Second communication port;
- 1153:: Third communication port;
- 1160:: Bottom wall;
- 1161:: First blocking wall;
- 1162:: Second blocking wall;
- 1163:: Third blocking wall;
- 117:: Fixing portion;
- 12:: Flow blocking assembly;
- 121:: First flow blocking member;
- 1211:: Engagement groove;
- 122:: Second flow blocking member;
- 1221:: Rotating groove;
- 1222:: Snap-fit groove;
- 1223:: Fixing groove;
- 13:: Adjustment member;
- 131:: First limiting portion*;*
- 132:: Second limiting portion*;*
- 133:: Engagement portion;
- 134:: Snap-fit portion;
- 20:: Liquid injection apparatus;
- 30:: Brewing apparatus;
- 31:: Accommodating member.

## Claims

1. A flow diverting adjustment apparatus (10), configured to brew a preset substance, **characterized in that** the flow diverting adjustment apparatus (10) comprises:
a flow diverting member (11), wherein the flow diverting member (11) comprises an input channel (111) and at least two output channels (112, 113), the output channels (112, 113, 114) are capable of being in intercommunication, and the input channel (111) is capable of being in communication with at least one of the output channels (112, 113, 114); and
a flow blocking assembly (12), wherein the flow blocking assembly (12) comprises at least one flow blocking member (121, 122), and the flow blocking member (121, 122) is movably connected to the flow diverting member (11), to cause the output channels (112, 113, 114) to be in a communication state or a blocked state.

2. The flow diverting adjustment apparatus (10) according to claim 1, **characterized in that** the flow diverting member comprises a first output channel and a second output channel, the first output channel is arranged surrounding the second output channel, the flow blocking assembly comprises a first flow blocking member, and the first flow blocking member is movably connected to the flow diverting member, to cause the first output channel and the second output channel to be in a communication state or a blocked state.

3. The flow diverting adjustment apparatus (10) according to claim 2, **characterized in that** the flow diverting member further comprises a third output channel, the second output channel is arranged surrounding the third output channel, the flow blocking assembly further comprises a second flow blocking member, and the second flow blocking member is movably connected to the flow diverting member, to cause the second output channel and the third output channel to be in a communication state or a blocked state.

4. The flow diverting adjustment apparatus (10) according to claim 3, **characterized in that** the flow diverting adjustment apparatus further comprises an adjustment member, wherein the adjustment member is connected to the first flow blocking member and the second flow blocking member, and the adjustment member is capable of driving the first flow blocking member and the second flow blocking member to move relative to the flow diverting member.

5. The flow diverting adjustment apparatus (10) according to claim 4, **characterized in that** the adjustment member comprises a first limiting portion and a second limiting portion, and the first limiting portion and the second limiting portion are respectively arranged at two ends of the first flow blocking member, to cause the adjustment member to be capable of driving the first flow blocking member to rotate relative to the flow diverting member; and/or
the adjustment member comprises an engagement portion, an engagement groove is provided on the first flow blocking member, and the engagement portion is capable of being engaged with the engagement groove, to cause the adjustment member to be capable of driving the first flow blocking member to rotate relative to the flow diverting member.

6. The flow diverting adjustment apparatus (10) according to claim 4, **characterized in that** a rotating groove is provided on the second flow blocking member, the adjustment member is capable of abutting against the rotating groove, and a depth of the rotating groove gradually increases in a circumferential direction of the second flow blocking member, to cause the adjustment member to be capable of driving the second flow blocking member to move in a direction away from or close to the flow diverting member when rotating.

7. The flow diverting adjustment apparatus (10) according to claim 6, **characterized in that** the flow diverting adjustment apparatus further comprises an elastic member connected to the second flow blocking member, one end of the elastic member abuts against the adjustment member, the other end of the elastic member abuts against the flow diverting member, and the adjustment member is capable of driving the elastic member to rotate; and/or
a fixing groove is provided on the second flow blocking member, the flow diverting member comprises a fixing portion, the fixing portion is arranged extending in the direction away from the flow diverting member, and the fixing groove is capable of being snapped into the fixing portion.

8. The flow diverting adjustment apparatus (10) according to claim 4, **characterized in that** the adjustment member has a first position, a second position, and a third position relative to the flow diverting member;
when the adjustment member is at the first position, the first flow blocking member blocks communication between the first output channel and the second output channel, and the input channel is in communication with the first output channel;
when the adjustment member is at the second position, the first output channel is in communication with the second output channel, the second flow blocking member blocks communication between the second output channel and the third output channel, and the input channel is in communication with the first output channel and the second output channel; and
when the adjustment member is at the third position, the first output channel is in communication with the second output channel, the second output channel is in communication with the third output channel, and the input channel is in communication with the first output channel, the second output channel, and the third output channel.

9. Coffee machine (100), **characterized by** comprising:
the flow diverting adjustment apparatus (10) according to any one of claims 1 to 8;
a liquid injection apparatus (20), connected to the flow diverting member (11) and configured to inject liquid into the input channel (111); and
a brewing apparatus (30), wherein the brewing apparatus (30) is connected to the flow diverting member (11), and at least one of the output channels (112, 113, 114) is configured to output the liquid to the brewing apparatus.

10. The coffee machine according to claim 9, **characterized in that** the different output channels are located at different positions of the brewing apparatus in a radial direction of the flow diverting member.
